# EUROPEAN PATENT APPLICATION

(11) **EP 4 808 229 A1**
(43) Date of publication of application: **16.09.2026**
(21) Application number: 24896428.0
(22) Date of filing: 22.11.2024
(51) Int. Cl.: H04W 60/00

(54) **COMMUNICATION METHOD AND RELATED APPARATUS**

(30) Priority: 30.11.2023 CN 202311626794
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Gill Jennings & Every LLP
(86) International application number: PCT/CN2024/133779
(87) International publication number: WO 2025/113337

(57) **Abstract**

This application provides a communication method and related apparatus. The method includes: a terminal being connected to a first network element through a first access network device, where the first network element is responsible for access management of the terminal; the first access network device or the first network element sends first information to the terminal, where the first information indicates whether the first network element supports dual connection of the terminal through two access network devices; correspondingly, the terminal receives the first information, and when the first information indicates that the first network element supports dual connection of the terminal through two access network devices, the terminal sends second information to a second access network device, where the second information indicates the first network element, so as to request the second access network device to connect to the first network element. The method provided in this application enables a terminal to successfully register with a network through two access network devices when the terminal is in a dual 3GPP access mode.

## Description

This application claims priority to Chinese Patent Application No. 202311626794.8, filed with the China National Intellectual Property Administration on November 30, 2023, and entitled "COMMUNICATION METHOD AND RELATED APPARATUS", which is incorporated herein by reference in its entirety.

### TECHNICAL FIELD

This application relates to the field of communication technology, and in particular, to a communication method and a related apparatus.

### BACKGROUND

A terminal may connect to a network through two different 3rd generation partnership project (3rd generation partnership project, 3GPP) access network devices, and this method is referred to as a dual 3GPP access. In the dual 3GPP access mode, the terminal needs to connect to two radio access network (radio access network, RAN) devices simultaneously, maintain radio resource control (radio resource control, RRC) connections with the two RAN devices, and needs to register with the network through the two RAN devices.

However, when a terminal uses a dual 3GPP access, how the terminal registers with the network is still an unsolved problem.

### SUMMARY

This application provides a communication method and a related apparatus, so that when a terminal uses a dual 3GPP access, the terminal can successfully register with a network through two access network devices.

According to a first aspect, this application provides a communication method, which may be applied to a communication apparatus. For example, the communication apparatus may be a terminal, or may be a component (such as a chip or a chip system) configured in a terminal, or may be logical modules or software that can implement all or some of the functions of the terminal. This is not limited in this application. For ease of understanding and description, the following describes the method by taking a terminal as an example of the communication apparatus.

For example, the method includes: connecting to a first network element through a first access network device; and receiving first information sent by the first access network device or the first network element, where the first information indicates whether the first network element supports dual connection of the terminal through two access network devices.

It is to be understood that the terminal is a terminal that supports network access through a dual 3GPP mode. The first network element is responsible for access management of the terminal.

Alternatively, the first information indicates whether the first network element supports dual connection of the terminal with the first network element through two access network devices, which may also be referred to as: the first information indicates whether the first network element supports the terminal to connected to the first network element through two access network devices; or the first information indicates whether the first network element supports the terminal to registered with the first network element through two access network devices; or the first information indicates whether the first network element supports the terminal to connected to the first network element through two access network devices; or the first information indicates whether the first network element supports the terminal to connected with the first network element through two access network devices.

Optionally, when the first information indicates that the first network element supports dual connection of the terminal through two access network devices, second information is sent to the second access network device, where the second information is used to indicate the first network element, to request the second access network device to connect to the first network element.

Optionally, when the first information indicates that the first network element does not support dual connection of the terminal through two access network devices, third information is sent to the second access network device, where the third information indicates that the second access network device cannot select the first network element.

The access types of the two access network devices mentioned above are 3GPP access types (access type), meaning that the first information indicates whether the first network element supports dual connection of the terminal through two access network devices of the 3GPP access type. Furthermore, the RAT types of these two access network devices may be the same or different.

Based on this method, after the terminal is connected to the first network element via the first access network device, the terminal can determine whether the first network element supports simultaneous connections of two access network devices to the first network element by receiving first information sent from the first access network device or the first network element. If the first network element supports simultaneous connections of two access network devices to the first network element, the terminal sends second information indicating the first network element to the second access network device, to request the second access network device to connect to the first network element. Alternatively, if the first network element does not support simultaneous connections of two access network devices to the first network element, the terminal sends third information, to the second access network device, indicating that the second access network device cannot select the first network element, to request the second access network device to connect to another network element other than the first network element. Therefore, the method provided in this application can enable a terminal to successfully register with the network through two access network devices when the terminal accesses the network using a dual 3GPP mode.

With reference to the first aspect, in some possible implementations of the first aspect, the third information does not include an identifier of the first network element; or the third information includes an identifier of the first network element and an indication that the first network element is not selected.

Based on this method, by sending third information to the second access network device, the second access network device can be prevented from selecting a connection to the first network element.

With reference to the first aspect, in some possible implementations of the first aspect, the method further includes: receiving fourth information from the first network element, wherein the fourth information indicates that the terminal is authorized to access the network through two access network devices.

It is to be understood that the terminal being authorized to access the network through two access network devices means that the terminal is allowed to access the network using a dual 3GPP access mode.

It is also to be understood that when the terminal receives the fourth information indicating that the terminal is authorized to access the network through two access network devices, the terminal determines that it can register with the network through the second access network device, and sends the second information or the third information to the second access network device.

In a possible implementation, sending the second information to the second access network device includes: sending the second information to the second access network device based on the fourth information.

For example, when the first information indicates that the first network element supports dual connection of the terminal through two access network devices, and the terminal is authorized to access the network through the two access network devices, the second information is sent to the second access network device.

In another possible implementation, sending the third information to the second access network device includes: sending the third information to the second access network device based on the fourth information.

For example, when the first information indicates that the first network element does not support dual connection of the terminal through two access network devices, and the terminal is authorized to access the network through the two access network devices, the third information is sent to the second access network device.

Optionally, the fourth information may further indicate that the terminal is not authorized to access the network through two access network devices. In this case, the terminal is not required to send the second information and the third information.

Likewise, the terminal is not authorized to access the network through two access network devices means that the terminal is not permitted to access the network using a dual 3GPP mode.

With reference to the first aspect, in some possible implementations of the first aspect, before receiving the first information from the first network element, the method further includes: sending fifth information to the first access network device or the first network element, where the fifth information indicates that the terminal supports access to the network through two access network devices.

Alternatively, the fifth information indicates that the terminal expects to access the network through two access network devices.

Sending fifth information to the first access network device to request the first access network device to select a first network element that supports dual connection of the terminal through two access network devices.

Sending the fifth information to the first network element may trigger the first network element to send the first information to the terminal; simultaneously, when the first network element supports dual connection through two access network devices, the first network element may accept, based on the fifth information, an N2 request sent by the terminal through the second access network device. The N2 request may be understood as a request from an access network device to connect to the first network element.

With reference to the first aspect, in some possible implementations of the first aspect, the method further includes: receiving sixth information from the first network element, where the sixth information indicates radio access technologies (radio access technologies, RATs) of the two access network devices; and selecting a second access network device based on the sixth information.

It is to be understood that, when the first network element supports dual connection of the terminal through two access network devices, the RAT type of the second access network device should belong to the RAT types supported by the first network element. Since the terminal is connected to the first network element through the first access network device, the RAT type of the first access network device belongs to the RAT types supported by the first network element.

It is also to be understood that the sixth information and the first information may be sent simultaneously, or may be sent separately. When the sixth information and the first information are sent simultaneously, the content indicated by the first information and the sixth information may be carried in a registration accept message sent by the first network element to the terminal.

According to a second aspect, this application provides a communication method, which may be applied to a communication apparatus. The communication apparatus may be, for example, a first network element, or may be a component (such as a chip or a chip system) configured in the first network element, or may alternatively be a logical module or software capable of implementing all or a part of the functions of the first network element. This is not limited in this application. For ease of understanding and description, the following describes the method using an example in which the first network element is an instance of the communication apparatus.

For example, the method includes: sending first information to a terminal, where the first information indicates whether a first network element supports dual connection of the terminal through two access network devices; and when the first network element supports dual connection of the terminal through two access network devices, receiving a registration request message sent by the terminal through a second access network device.

The first network element is responsible for access management of the terminal. In other words, the first network element is the network element to which the terminal is connected through the first access network device.

Based on this method, the first network element sends first information indicating whether the first network element supports dual connection to the terminal, thereby enabling the terminal that receives the first information to determine, based on the first information, the first network element connected to the second access network device, ensuring that the terminal can successfully register with the network through the second access network device.

It is to be understood that before sending the first information to the terminal, the terminal is connected to the first network element through the first access network device.

Optionally, before sending the first information to the terminal, the method further includes: receiving fifth information from the terminal through the first access network device, wherein the fifth information indicates that the terminal supports accessing the network through two access network devices.

For the description of the fifth information, refer to the description of the fifth information sent by the terminal to the first network element in the first aspect, and details are not repeated herein.

Optionally, before sending the first information to the terminal, the method further includes: receiving fourth information from a policy control function (policy control function, PCF) network element, wherein the fourth information indicates that the terminal is authorized to access the network through two access network devices.

In this case, the PCF may be replaced with a unified data management (unified data management, UDM), that is, receiving the fourth information from the UDM.

Optionally, sending the first information to the terminal includes: sending the first information to the terminal based on the fourth information.

For example, when the first network element has the capability of supporting dual connection of the terminal through two access network devices, and the terminal is authorized to access the network through the two access network devices, the first network element sends the first information to the terminal, where the first information indicates that the first network element supports dual connection of the terminal through the two access network devices.

For example, when the first network element does not have the capability of supporting dual connection of the terminal through two access network devices, but the terminal is authorized to access the network through the two access network devices, the first network element sends first information to the terminal, where the first information indicates that the first network element does not support dual connection of the terminal through the two access network devices.

Optionally, the fourth information may further indicate that the terminal is not authorized to access the network through two access network devices.

For example, sending the first information to the terminal includes: sending the first information to the terminal based on the fourth information.

For example, when the first network element has the capability to support dual connection of the terminal through two access network devices, and the terminal is not authorized to access the network through two access network devices, the first information is sent to the terminal, where the first information indicates that the first network element does not support dual connection of the terminal through two access network devices.

For example, when the first network element does not have the capability to support dual connection of the terminal through two access network devices, and the terminal is not authorized to access the network through two access network devices, the first information is sent to the terminal or the first information is not sent, where the first information indicates that the first network element does not support dual connection of the terminal through two access network devices.

In summary, when the fourth information indicates that the terminal is not authorized to access the network through two access network devices, the first information may be directly sent to the terminal or the first information may not be sent, where the first information indicates that the first network element does not support dual connection of the terminal through two access network devices.

Based on this method, the first network element sends first information to the terminal, which indicates whether the first network element supports simultaneous connections of two access network devices to the first network element, so that the terminal receiving the first information can determine, based on the first information, whether it can connect to the first network element through the second access network device when accessing the network through a dual 3GPP mode. Consequently, when the first network element supports simultaneous connections of two access network devices to the first network element, the terminal can request the second access network device to connect to the first network element; or when the first network element does not support simultaneous connections of two access network devices to the first network element, the terminal can request the second access network device to connect to another network element other than the first network element. Therefore, the method provided in this application can enable a terminal to successfully register with the network through two access network devices when the terminal accesses the network through a dual 3GPP mode.

Optionally, the access types of the two access network devices are both 3GPP access types. That is, whether the first network element supports dual connection of the terminal through two access network devices whose access types are both 3GPP access types.

For the description of the RAT type of the access network device, reference may be made to the description of the first aspect mentioned above, and no further details will be provided here.

According to a third aspect, this application provides a communication method, which may be applied to a communication apparatus. The communication apparatus may be, for example, an access network device, or may be a component (such as a chip or a chip system) configured in an access network device, or may alternatively be logical modules or software capable of implementing all or some functions of the access network device. This is not limited in this application. For ease of understanding and description, the following describes the method using an example in which a first access network device serves as an example of the communication apparatus.

For example, the method includes: receiving fifth information from a terminal, where the fifth information indicates that the terminal supports access to a network through two access network devices; connecting to a first network element based on the fifth information; and sending first information to the terminal, where the first information indicates whether the first network element supports dual connection of the terminal through the two access network devices.

Among them, the first network element is responsible for access management of the terminal. In other words, the first network element is the network element to which the terminal is connected through the first access network device.

For the description of the first information, reference may be made to the relevant description in the first aspect mentioned above, and no further details will be provided here.

Based on this method, the first access network device selects the first network element based on the received fifth information and establishes a connection with the first network element. After establishing the connection with the first network element, the first access network device may indicate, by sending first information to the terminal, whether the first network element supports dual connection, thereby enabling the terminal that receives the first information to determine, based on the first information, the network element connected to the second access network device, ensuring that the terminal can successfully access the network through the second access network device.

Optionally, the connecting to the first network element based on the fifth information includes: connecting to the first network element based on the fifth information and the first mapping relationship. The first mapping relationship indicates whether each of the plurality of first network elements supports dual connection, and the first mapping relationship may be preconfigured on the first access network device.

Optionally, the connecting to the first network element based on the fifth information includes: sending seventh information to a network repository function (network repository function, NRF) network element based on the fifth information, wherein the seventh information is used to request the NRF to select a first network element that supports dual connection of the terminal through two access network devices; receiving an identifier of the first network element from the NRF; and connecting to the first network element based on the identifier of the first network element.

Optionally, when the first network element is connected through an NRF, the method further includes: receiving first information from the NRF.

With reference to the third aspect, in some possible implementations of the third aspect, the method further includes: receiving fourth information sent by the first network element, where the fourth information indicates that the terminal is authorized to access the network through two access network devices.

Optionally, sending first information to the terminal includes: sending the first information to the terminal based on the fourth information.

For example, when the first network element supports dual connection of the terminal through two access network devices, and the terminal is authorized to access the network through the two access network devices, the first information is sent to the terminal, where the first information indicates that the first network element supports dual connection of the terminal through the two access network devices.

For example, when the first network element does not support dual connection of the terminal through two access network devices, but the terminal is authorized to access the network through the two access network devices, the first information is sent to the terminal, where the first information indicates that the first network element does not support dual connection of the terminal through the two access network devices.

Optionally, the fourth information indicates that the terminal is not authorized to access the network through two access network devices. In this case, the first access network device may directly send the first information to the terminal or may not send the first information, where the first information indicates that the first network element does not support dual connection of the terminal through two access network devices.

For a more detailed description of the fourth information, refer to the description of the second aspect mentioned earlier, and no further elaboration will be provided herein.

With reference to the third aspect, in some possible implementations of the third aspect, the method further includes: sending the fifth information to the first network element, so that the first network element that supports dual connection accepts, based on the fifth information, the N2 request sent by the terminal through the second access network device.

Optionally, the access types of the two access network devices are both 3GPP access types.

According to a fourth aspect, this application provides a communication method, which may be applied to a communication apparatus. The communication apparatus may be, for example, an access network device, or may be a component (such as a chip or a chip system) configured in an access network device, or may alternatively be logical modules or software that can implement all or some functions of the access network device. This is not limited in this application. For ease of understanding and description, the following describes the method by using an example in which a second access network device is an example of the communication apparatus.

For example, the method includes: receiving second information or third information from a terminal, where the second information indicates a first network element, and the third information indicates that the second access network device cannot select the first network element; the terminal is connected to the first network element through a first access network device, and the first network element is responsible for access management of the terminal; determining a target network element based on the second information or the third information; and sending registration information to the target network element.

For example, the target network element is the first network element; and the determining a target network element based on the second information or the third information includes: determining, based on the second information, that the target network element is the first network element.

For example, the target network element is another network element responsible for access management of a terminal, which is different from the first network element; and the selecting a target network element based on the second information or the third information includes: determining, based on the third information, another network element responsible for access management of a terminal, which is different from the first network element, as the target network element.

Based on this method, the second access network device can determine the target AMF based on the second or third information from the terminal, effectively avoiding the problem where the second access network device requests a connection with the first network element when the first network element does not support dual connection, thereby preventing a connection failure, and ensuring the success rate of the terminal successfully registering with the network through the two access network devices.

According to a fifth aspect, this application provides a communication apparatus, including modules or units configured to implement the method in any one of the foregoing aspects and any one of the possible implementations of the foregoing aspects. It is to be understood that each module or unit may implement a corresponding function by executing a computer program.

According to a sixth aspect, this application provides a communications apparatus, including a processor, where the processor is configured to perform the method according to any one of the foregoing aspects and any one of the possible implementations of the foregoing aspects.

The apparatus may further include a memory, configured to store instructions and data. The memory is coupled to the processor, and when the processor executes the instructions stored in the memory, the method described in the foregoing aspects may be implemented.

The apparatus may further include a communication interface, where the communication interface is configured to enable the apparatus to communicate with another device. For example, the communication interface may be a transceiver, a circuit, a bus, a module, or a communication interface of another type.

According to a seventh aspect, this application provides a chip system, where the chip system includes at least one processor, configured to support implementation of the functions involved in any one of the foregoing aspects and any one of the possible implementations of the foregoing aspects, for example, receiving or processing the data and/or information involved in the foregoing method.

In a possible design, the chip system further includes a memory, where the memory is configured to store program instructions and data, and the memory is located inside or outside the processor.

The chip system may be composed of a chip, or may include a chip and other discrete components.

According to an eighth aspect, this application provides a computer-readable storage medium, including a computer program, where when the computer program is run on a computer, the computer is enabled to implement the method according to any one of the foregoing aspects and any one of the possible implementations of the foregoing aspects.

According to a ninth aspect, this application provides a computer program product, where the computer program product includes a computer program (which may also be referred to as code or an instruction), and when the computer program is run, the computer is enabled to perform the method according to any one of the foregoing aspects and any one of the possible implementations of the foregoing aspects.

According to a tenth aspect, this application provides a communications system, including the foregoing terminal, a first network element, a first access network device, and a second access network device. The terminal may be configured to implement the method in any one of the first aspect and the possible implementations of the first aspect; the first network element may be configured to implement the method in any one of the second aspect and the possible implementations of the second aspect; the first access network device may be configured to implement the method in any one of the third aspect and the possible implementations of the third aspect; and the second access network device may be configured to implement the method in any one of the fourth aspect and the possible implementations of the fourth aspect.

It is to be understood that the fifth aspect to the tenth aspect of this application correspond to the technical solutions of the first aspect to the fourth aspect of this application, and beneficial effects achieved by the aspects and the corresponding feasible implementations are similar, and details are not described again.

### BRIEF DESCRIPTION OF DRAWINGS

FIG. 1 is a schematic diagram of a network architecture based on a service-based architecture according to an embodiment of this application;
FIG. 2 and FIG. 3 are schematic architectural diagrams of a communications system applicable to the methods provided in embodiments of this application;
FIG. 4 is a schematic flowchart of a communication method according to an embodiment of this application;
FIG. 5 is another schematic flowchart of a communication method according to an embodiment of this application;
FIG. 6 and FIG. 7 are schematic block diagrams of an apparatus according to an embodiment of this application.

### DESCRIPTION OF EMBODIMENTS

The technical solutions in this application are described below with reference to the accompanying drawings.

For ease of understanding the embodiments of this application, the following provides several descriptions first:
First, in the embodiments of this application, the use of prefixes such as "first" and "second" is merely intended to facilitate the distinguishing and description of different things that belong to the same name category, and does not impose any constraints on the order, size, or quantity of these things. For example, "first access network device" and "second access network device" merely refer to different devices, without limiting the number of devices or the priority relationship between them. Another example is that "second information" and "third information" merely refer to different pieces of information, and there is no temporal sequence, size relationship, or priority relationship between them.

Secondly, the terms "sending" and "receiving" in the embodiments of this application indicate the direction of signal transmission. For example, "sending second information to a second access network device" may be understood as the destination of the information being the second access network device, which may include directly sending the information through an air interface, or indirectly sending the information through an air interface by another unit or module. "Receiving sixth information from a first network element" may be understood as the source of the sixth information being the first network element, which may include directly receiving the sixth information from the first network element through an air interface, or indirectly receiving the sixth information from the first network element through an air interface from another unit or module. "Sending" may also be understood as "output" from a chip interface, and "receiving" may also be understood as "input" to a chip interface.

In other words, sending and receiving may be performed between devices, for example, between a terminal and a first network element; or may be performed within a device, for example, through a bus, wiring, or interface, between components, between modules, between chips, or between software or hardware modules within the device.

It is understandable that information may undergo necessary processing, such as encoding and modulation, before being sent from the source end to the destination end. After receiving the information from the source end, the destination end may also perform corresponding processing, such as decoding and demodulation, to interpret the valid information from the source end. Similar expressions in this application can be understood in a similar manner, and no further explanation will be provided.

Third, in the embodiments of this application, "at least one" means one or more, and "a plurality of" means two or more. The term "and/or" describes an association relationship between associated objects, and indicates that three relationships may exist. For example, "A and/or B" may indicate the following three cases: only A exists, both A and B exist, and only B exists, where A and B may be singular or plural. The character "/" generally indicates an "or" relationship between the associated objects, but does not preclude the possibility that the associated objects may have an "and" relationship. The specific meaning can be understood in combination with the context. "At least one of the following" or a similar expression thereof refers to any combination of these items, including any combination of singular or plural items. For example, "at least one of a, b, or c" may represent: a, b, c; a and b; a and c; b and c; or a, b, and c, where a, b, and c may each be singular or plural in number.

Fourth, in the embodiments of this application, "indication" may include direct indication and indirect indication, or may include explicit indication and implicit indication. Information indicated by some information (for example, the indication information described below) is referred to as to-be-indicated information. In a specific implementation process, there are many ways to indicate the to-be-indicated information. For example, but not limited to, the to-be-indicated information may be directly indicated, such as the to-be-indicated information itself or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, while other parts of the to-be-indicated information are known or pre-agreed. For example, the indication of specific information may be implemented by using a pre-agreed (for example, protocol predefined) arrangement order of the information, thereby reducing the indication overhead to some extent. This application does not limit the specific manner of indication.

It may be understood that, for a sender of the indication information, the indication information may be used to indicate the to-be-indicated information, and for a receiver of the indication information, the indication information may be used to determine the to-be-indicated information.

Fifth, in the embodiments of this application, descriptions such as "when...," "in the case of...," "if," and "when" mean that a device (for example, a terminal, a first AMF, or a first access network device) performs corresponding processing under an objective condition, and do not limit time, and do not require that the device (for example, the terminal, the first AMF, or the first access network device) necessarily perform a determining action during implementation, or do not mean that there is another limitation.

Sixth, "predefinition" in this application may be understood as definition, predefinition, storage, pre-storage, pre-negotiation, pre-configuration, solidification, or pre-burning.

The technical solutions provided in this application may be applied to various communications systems, for example, a long term evolution (long term evolution, LTE) system, an LTE frequency division duplex (frequency division duplex, FDD) system, an LTE time division duplex (time division duplex, TDD) system, a sidelink (sidelink, SL) communications system, a worldwide interoperability for microwave access (worldwide interoperability for microwave access, WiMAX) communications system, a 5th generation (5th generation, 5G) mobile communications system or a new radio access technology (new radio access technology, NR) system, a satellite communications system, or the like. The 5G mobile communications system may include non-standalone networking (non-standalone, NSA) and/or standalone networking (standalone, SA).

The technical solutions provided in this application may also be applied to future communication systems, such as a sixth generation (6th generation, 6G) mobile communication system. This application imposes no limitations thereto.

Before introducing the method provided in the embodiments of this application, a brief introduction is first provided for the various network elements involved in this application.
1. Access network device: The access network in this application refers to a device that has wireless transceiver functions, or may be referred to as a radio access network (RAN) device. The access network device can provide wireless communication function services and can connect a terminal to a wireless network. The radio access network device may be a node in a radio access network, and is referred to as a RAN node for short.

In a possible scenario, the RAN node may be a base station (base station, BS), an evolved NodeB (evolved NodeB, eNodeB), a transmission reception point (transmission reception point, TRP), a home evolved NodeB (or a home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation NodeB in a 6G mobile communication system, a base station in a future mobile communication system, or the like.

The RAN node may also be a device in an equipment to equipment (device to device, D2D) communication system, a vehicle to everything (V2X) communication system, a machine to machine (M2M) communication system, an internet of things (IoT) communication system, or a device performing the function of a base station in these systems. The RAN node may also be a RAN node in a non-terrestrial network (NTN), meaning the RAN node can be deployed on an unmanned aerial vehicle (UAV) or a satellite. The RAN node may be a macro base station, a micro base station, an indoor base station, a relay node, a donor node, or may be a radio controller in a cloud radio access network (cloud radio access network, CRAN) scenario, or a node in an open radio access network (open radio access network, O-RAN or ORAN) scenario, among others.

Optionally, the RAN node may also be a server, a wearable device, a vehicle, an in-vehicle device, or the like. For example, the RAN node in V2X technology may be a road side unit (road side unit, RSU). Of course, the RAN node may also be a node in a core network.

In another possible scenario, multiple RAN nodes collaborate to assist a terminal in achieving wireless access, where different RAN nodes respectively implement some functions of a base station. For example, the RAN node may be a central unit (CU), a distributed unit (DU), a CU-control plane (control plane, CP), a CU-user plane (user plane, UP), a radio unit (RU), or the like. The CU and DU may be separately disposed, or may be included in the same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or CU-CP and CU-UP), DU, or RU may also have different names, but a person skilled in the art can understand their meanings. For example, in an ORAN system, the CU may also be referred to as an Open CU (O-CU), the DU may also be referred to as an Open DU (O-DU), the CU-CP may also be referred to as an Open CU-CP (O-CU-CP), the CU-UP may also be referred to as an Open CU-UP (O-CU-UP), and the RU may also be referred to as an Open RU (O-RU).

Any one of the units, such as the CU (or CU-CP, CU-UP), DU, or RU, may be implemented through a software module, a hardware module, or a combination of a software module and a hardware module. That is, the access network device in this application may be a virtualized device or an access network function network element, for example, implemented through general-purpose hardware and instantiated virtualization functions, or dedicated hardware and instantiated virtualization functions. The general-purpose hardware may be a server, for example, a cloud server.

2. Terminal: The terminal in this application may also be referred to as user equipment (user equipment, UE), an access terminal, a subscriber unit, a subscriber station, a mobile station, a mobile console, a remote station, a remote terminal, a mobile device, a user terminal, a terminal device, a wireless communication device, a user agent, or a user apparatus.

The terminal may be a device that provides a user with voice/data connectivity, for example, a handheld device or a vehicle-mounted device with a wireless connection function. Currently, some examples of terminals may be a mobile phone (mobile phone), a tablet computer (pad), a computer (such as a notebook computer or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self driving), an unmanned aerial vehicle (UAV), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (PDA), a handheld device with a wireless communication function, a computing device or another processing device connected to a wireless modem, a vehicle-mounted device, a wearable device, a terminal in a 5G network, a terminal in a future evolved public land mobile network (public land mobile network, PLMN), or the like.

Wearable devices can also be referred to as wearable smart devices, which are a general term for devices developed using wearable technology that incorporate intelligent design into everyday wearables, such as glasses, gloves, watches, clothing, and shoes. These devices are portable and can be worn directly on the body or integrated into the user's clothing or accessories. Wearable devices are not just hardware; they also achieve powerful functionality through software support, data interaction, and cloud interaction. Broadly speaking, wearable smart devices include those with full functionality, larger sizes, and the ability to perform complete or partial functions without relying on a smartphone, such as smartwatches or smart glasses. They also include devices that focus on a specific type of application function and need to work in conjunction with other devices, such as smartphones, such as various smart wristbands or smart jewelry for monitoring vital signs.

In addition, the terminal may also be an end device in an IoT system. IoT is an important component of future information technology development, with its main technical feature being the ability to connect objects through communication technology and the Internet, thereby creating an intelligent network that enables human-machine interconnection and machine-to-machine interconnection. IoT technology can achieve massive connectivity, deep coverage, and energy efficiency for terminals through technologies such as Narrowband (NB) technology.

In addition, the terminal may also include sensors such as smart printers, train detectors, and gas stations. Their main functions include collecting data (for some terminals), receiving control information and downlink data from network devices, and transmitting electromagnetic waves to send uplink data to the network devices.

The terminal in this application may also be a virtualized device, for example, implemented through general-purpose hardware and instantiated virtualization functions, or through dedicated hardware and instantiated virtualization functions. The general-purpose hardware may be a server, such as a cloud server.

It is to be understood that this application does not impose any specific limitations on the particular forms of the radio access network device and the terminal.

The following introduces the network elements in the core network section:

3. First network element: configured to manage access or registration of the terminal. For example, the network element may be an access and mobility management function (access and mobility management function, AMF) network element in a 5G core network, or may be a network element defined in future protocols that is responsible for managing access or registration of the terminal.

In the 5G core network, the AMF is primarily responsible for the signaling processing functions, such as access control, mobility management, registration and deregistration.

4. User plane function (user plane function, UPF) network element: responsible for forwarding and receiving user data from terminals. The UPF network element can receive user data from the data network and transmit the user data to the terminal through access network devices. The UPF network element can also receive user data from the terminal through access network devices and forward it to the data network. The transmission resources and scheduling functions provided by the UPF network element for the terminal are managed and controlled by the SMF network element.

5. Session management function (session management function, SMF) network element: responsible for the selection of user plane function network elements, allocation of internet protocol (internet protocol, IP) addresses, establishment, modification, and release of sessions, as well as quality of service control.

6. Application function (application function, AF) network element: primarily supports interaction with the 3GPP core network to provide services, such as influencing data routing decisions and providing some third-party services to the network side through the policy control function network element.

7. Policy control function (policy control function, PCF) network element: responsible for making decisions on policy control, providing policy rules for control plane functions, and offering traffic-based charging control functions.

8. Unified data management (unified data management, UDM) network element: primarily responsible for managing subscription data of terminals, including the storage and management of terminal identifiers, access authorization for terminals, and more.

9. Network repository function (network repository function, NRF) network element: supports the registration and discovery of network functions.

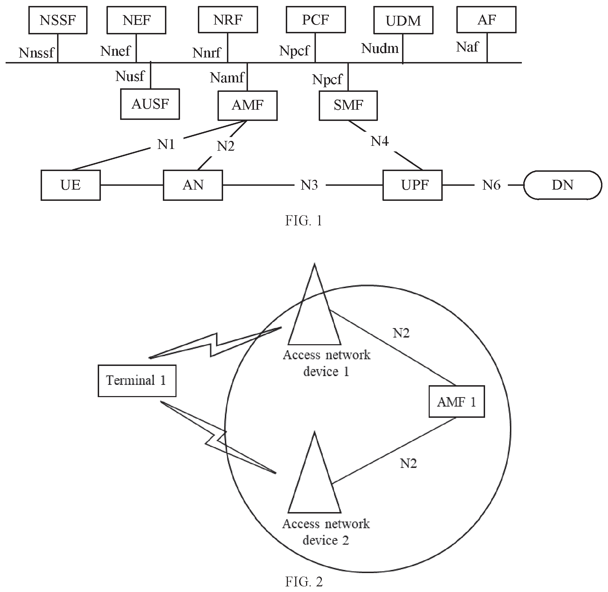

To facilitate understanding of the embodiments of this application, the following will provide a detailed description of the network architecture applicable to the embodiments of this application with reference to FIG. 1.

FIG. 1 is a schematic diagram of a network architecture based on a service-based architecture according to an embodiment of this application. As shown in FIG. 1, the 5G network architecture may include three parts: a UE part, a data network, and an operator network.

The operator network may include one or more of the following network elements: an authentication server function (authentication server function, AUSF) network element, a network exposure function (network exposure function, NEF) network element, a PCF network element, a UDM network element, an NRF network element, an application function (application function, AF) network element, an AMF network element, an SMF network element, an AN network element, a UPF network element, a network slice selection function (network slice selection function, NSSF) network element, and the like. In the operator network mentioned above, the parts other than the radio access network may be referred to as the core network part.

In the network architecture illustrated in Figure 1, the various network elements may communicate with each other based on service-based interfaces, where the Nnssf, Nnef, Nnrf, Npcf, Nudm, Naf, Nusf, Namf, and Npcf interfaces in Figure 1 are all service-based interfaces based on services. It is to be understood that the functions of some network elements may be referred to the descriptions provided in the above-mentioned network element introduction, and for specific details, reference may be made to known technologies, which will not be elaborated upon here.

The access network device may be connected to the first network element via an N2 interface, that is, the N2 interface is an interface between the access network device and the first network element.

Currently, terminals in communication systems are generally those that support network access through a single 3GPP access network device. With the development of communication technologies, a new type of terminal has emerged that can support network access through two different 3GPP access network devices. This method of network access by the terminal is referred to in this application as dual 3GPP access. In the dual 3GPP access mode, such terminals need to be connected to two RAN devices simultaneously, maintaining radio resource control (radio resource control, RRC) connections with both RAN devices, and need to register with the network through both RAN devices, or in other words, need to connect to the network through both RAN devices; or alternatively, need to access the network through both RAN devices.

Since current communication technologies only support terminals registering with the network through a single 3GPP access network device, for terminals that support dual 3GPP access, how to successfully register with the network in the dual 3GPP access mode has become an urgent issue that needs to be resolved.

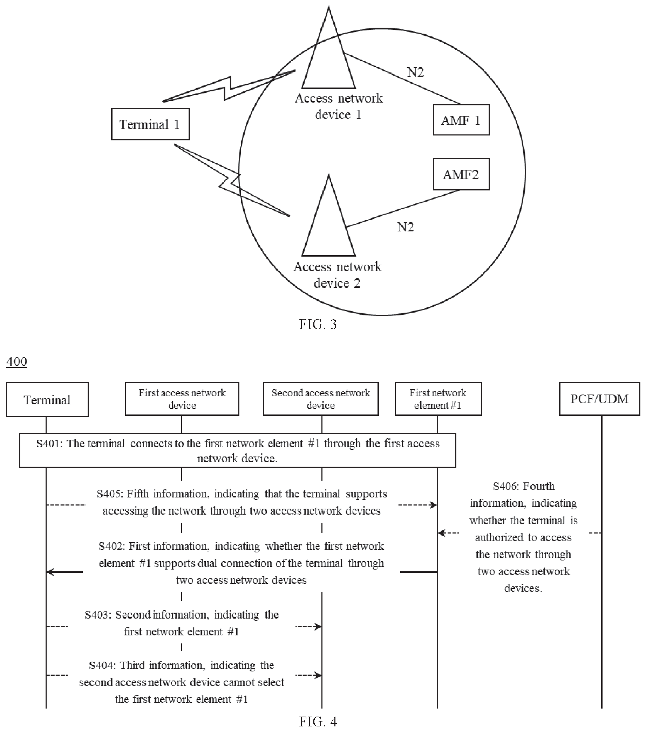

The following uses an example where the first network element is an AMF, and with reference to FIG. 2 and FIG. 3, describes the communication scenario provided in the embodiments of this application.

FIG. 2 is a schematic diagram of a communication scenario applicable to an embodiment of this application. As shown in FIG. 2, an AMF supporting dual connection (or, in other words, an AMF 1 supporting connection of a same terminal to the same AMF through two access network devices is deployed in the network). If the terminal 1 is a terminal supporting dual 3GPP access, the terminal 1 may connect to the AMF 1 through an access network device 1 and an access network device 2. For example, the terminal 1 is connected to the AMF 1 through an access network device 1 by using an N2 interface, and the terminal 1 is connected to the AMF 1 through an access network device 2 by using an N2 interface.

FIG. 3 is a schematic diagram of another communication scenario applicable to an embodiment of this application. As shown in FIG. 3, an AMF supporting dual connection is not deployed in the network (or, AMFs deployed in the network do not support the same terminal to connect to the same AMF through two access network devices, or AMFs deployed in the network do not all support the same terminal to connect to the same AMF through two access network devices). If the terminal 1 is a terminal that supports dual 3GPP access, the terminal 1 may connect to the AMF 1 by using the access network device 1, and connect to the AMF 2 by using the access network device 2. For example, the terminal 1 is connected to the AMF 1 through the access network device 1 by using an N2 interface, and the terminal 1 is connected to the AMF 2 through the access network device 2 by using an N2 interface.

The access network device 1 and the access network device 2 in FIG. 2 and FIG. 3 are both access network devices of a 3GPP access type, but the access network device 1 and the access network device 2 have different radio access technology (radio access technology, RAT) types (type). For example, the RAT type may be 5G NR, 5G NR satellite (5G NR satellite), or 6G RAT. The 5G NR satellite may be further classified into a low earth orbit (low earth orbit, LEO), a medium earth orbit (medium earth orbit, MEO), and a geostationary earth orbit (geostationary earth orbit, GEO).

It may be understood that the RAT types of the access network device 1 and the access network device 2 in FIG. 2 are both RAT types supported by the AMF 1; and the RAT type of the access network device 1 in FIG. 3 is an RAT type supported by the AMF 1, and the RAT type of the access network device 2 is an RAT type supported by the AMF 2. In other words, the RAT type of the access network device connected to the AMF through the N2 interface belongs to the RAT type supported by the AMF.

It may be understood that the access network device 1 and the access network device 2 in FIG. 2 belong to a same public land mobile network (public land mobile network, PLMN).

It may also be understood that the access network device 1 and the access network device 2 in FIG. 3 belong to a same PLMN or different PLMNs. In the case of a same PLMN, the AMF 1 and the AMF 2 also belong to the PLMN. In the case of different PLMNs, for example, the access network device 1 and the AMF 1 belong to a PLMN#1, and the access network device 2 and the AMF 2 belong to a PLMN#2.

From Figures 2 and 3, it is to be understood that there are two different scenarios when a terminal accesses the network through dual 3GPP mode. That is, the terminal can connect to two different first network elements through two access network devices, or the terminal can connect to the same first network element through two access network devices. Therefore, for a terminal that is allowed to access the network in dual 3GPP mode, it is necessary to clearly determine whether the terminal is registered with the same first network element or with different first network elements.

In view of this, the embodiments of this application provide a communication method and related apparatus. In this method, after a terminal that is allowed to access through dual 3GPP mode is connected to a first network element through a first access network device, the terminal may simultaneously connect to the first network element through a second access network device when the first network element supports dual connection, or the terminal may simultaneously connect to another network element (other than the first network element) responsible for access management of the terminal through the second access network device when the first network element does not support dual connection. Therefore, the method provided in this application can enable the terminal to clearly determine whether to register with the same first network element or with different first network elements through the two access network devices.

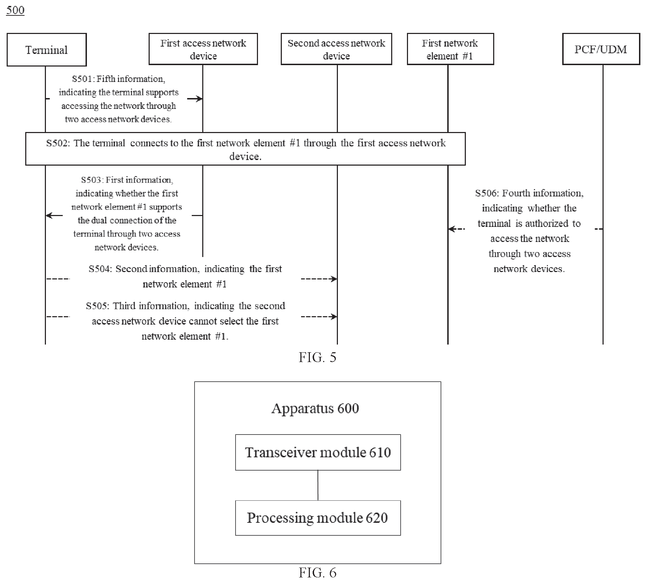

The communication method provided in the embodiments of this application is described in detail below with reference to FIG. 4 and FIG. 5. The method provided in this application may be applied to the network architecture shown in FIG. 1, and may also be applied to the application scenarios shown in FIG. 2 or FIG. 3, but the embodiments of this application are not limited thereto.

In the flowcharts shown in FIG. 4 and FIG. 5, the method is illustrated from the perspective of interaction between communication devices, but the entity executing the method is not limited by this application. For example, the terminal in FIG. 4 and FIG. 5 may be replaced by a chip, a chip system, or a processor that supports the terminal in implementing the method, or may be a logical module or software that can implement all or a part of the functions of the terminal; the access network device in FIG. 4 and FIG. 5 may be replaced by a chip, a chip system, or a processor that supports the access network device in implementing the method, or may be a logical module or software that can implement all or a part of the functions of the access network device; the first network element in FIG. 4 and FIG. 5 may be replaced by a chip, a chip system, or a processor that supports the first network element in implementing the method, or may be a logical module or software that can implement all or a part of the functions of the first network element.

It is to be understood that the first network element may also be referred to by another name, which is not limited in this application.

FIG. 4 is a schematic flowchart of a communication method 400 according to an embodiment of this application. The method 400 may include S401 to S406. The following provides a detailed description of the steps shown in the method 400.

S401: The terminal is connected to the first network element #1 through the first access network device. In other words, the terminal registers with the first network element #1 through the first access network device. Alternatively, the terminal is connected with the first network element #1 through the first access network device.

In this application, the first network element #1 refers to the first network element to which the terminal is connected through the first access network device.

In this application, the three expressions "registering with the first network element," "accessing the first network element," and "being connected to the first network element" may appear alternately. A person skilled in the art may understand that the meanings expressed by these three expressions are the same.

The terminal in this application is a terminal capable of accessing a network through a dual 3GPP mode.

Specifically, the terminal sends a registration request (registration request) message to the first network element through the first access network device, and the first network element sends a registration accept (registration accept) message to the terminal through the first access network device.

S402: The first network element #1 sends first information to the terminal, where the first information indicates whether the first network element #1 supports dual connection of the terminal through two access network devices. Correspondingly, the terminal receives the first information from the first network element #1.

In this application, dual connection refers to a scenario where a terminal is connected to the same first network element through two access network devices, or where a terminal accesses the same PLMN through two access network devices. In a dual connection scenario, the terminal accesses the same first network element through two access network devices, and the first network element needs to maintain two N2 connections for the same terminal, one with each of the two access network devices (or radio access network devices).

Alternatively, the first information indicates whether the first network element #1 supports dual connection of the terminal through two access network devices. This may also be referred to as: the first information indicates whether the first network element #1 supports the terminal to access the first network element #1 through two access network devices; or, the first information indicates whether the first network element #1 supports the terminal to register with the first network element #1 through two access network devices; or, the first information indicates whether the first network element #1 supports the terminal to connect to the first network element #1 through two access network devices; or alternatively, the first information indicates whether the network in which the first network element #1 is located supports dual connection of the terminal through two access network devices. For example, the first information may be dual steer support (dual steer support) information.

Here, the first information may be generated by the first network element #1 and sent to the terminal by the first access network device. That is, the first network element #1 sends the first information to the terminal through the first access network device. Correspondingly, the first access network device receives the first information and sends the first information to the terminal.

Example 1: The first information may be sent by the first network element #1 based on its own capability; or, the first information is sent by the first network element #1 based on its own capability and information indicating whether the terminal is authorized to access the network through two access network devices. The process by which the first network element #1 sends the first information is described in detail below, so it is not elaborated upon here.

It should be noted here that the capability of the first network element is used to describe the characteristics of the first network element itself, specifically whether the first network element deployed in the network has the capability to support dual connection of the terminal through two access network devices. This capability of the first network element may be preconfigured.

Example 2: The first information may be sent by the first network element #1 based on the capability of the network in which it is located. The first network element #1 and the first access network device belong to the same PLMN. For example, the first access network device belongs to PLMN#1, and the first network element #1 also belongs to PLMN#1. Here, PLMN#1 is the network in which the first network element #1 is located.

The above S402 may be replaced with the following: the first network element #1 sends first information to the terminal, where the first information indicates whether the network (i.e., PLMN#1) in which the first network element #1 is located supports dual connection of the terminal through two access network devices.

Optionally, in S402, if the first information indicates that the first network element #1 supports dual connection of the terminal through two access network devices; or if the first information indicates that the network (i.e., PLMN#1) in which the first network element #1 is located supports dual connection of the terminal through two access network devices, the terminal may proceed to perform S403.

At this time, the first access network device and the second access network device belong to the same PLMN.

Optionally, in S402, if the first information indicates that the first network element #1 does not support dual connection of the terminal through two access network devices, or if the first information indicates that the network (i.e., PLMN#1) in which the first network element #1 is located does not support dual connection of the terminal through two access network devices, the terminal may proceed to perform S404.

At this point, the first access network device and the second access network device may belong to the same PLMN or different PLMNs.

When the first access network device and the second access network device belong to different PLMNs (for example, when the first access network device belongs to PLMN#1 and the second access network device belongs to PLMN#2), the terminal may initiate a registration with PLMN#2. In this way, even if the terminal learns that PLMN#1 does not support dual connection, the terminal can still access PLMN#1 through one access network device (for example, the first access network device), and then access PLMN#2 through another access network device (for example, the second access network device), thereby enabling the terminal to access using a dual 3GPP mode, effectively avoiding the scenario where the terminal accesses PLMN#1 through two access network devices.

It is to be understood that the first information in this application may be carried in a registration accept (registration accept) message, or the first information may be replaced by the registration accept message. The registration accept message may further include a 5G globally unique temporary UE identifier (5G globally unique temporary identifier, 5G-GUTI), where the 5G-GUTI includes a globally unique first network element ID and a 5G-Temporary Mobile Subscriber Identity (temporary mobile subscriber identity, TMSI) (referred to as 5G-TMSI). The GUAMI identifies the first network element allocated to the terminal, where the GUAMI may be composed of a mobile country code (mobile country code, MCC), a mobile network code (mobile network code, MNC), and a first network element identifier, and the first network element identifier may be composed of a first network element area ID, a first network element set ID, and a first network element pointer. The 5G-TMSI uniquely identifies a terminal within the first network element. It is to be understood that the 5G-GUTI in the registration accept message includes the identifier of the first network element.

Optionally, the method 400 further includes: S403, where the terminal sends second information to the second access network device, where the second information indicates the first network element #1, to request the second access network device to establish a connection with the first network element #1. Correspondingly, the second access network device receives the second information, and sends a registration request (registration request) message to the first network element #1 based on the second information.

For example, the second information includes an identifier of the first network element #1. For instance, the second information includes a 5G-GUTI, where the 5G-GUTI includes the identifier of the first network element #1.

It is to be understood that the second information in this application may be carried in an access network message (AN message), or the second information may be replaced by an AN message. Optionally, the AN message may further include a registration request message.

In other words, when the first information indicates that the first network element #1 supports dual connection, the terminal may connect to the first network element #1 simultaneously through the first access network device and the second access network device.

Among them, both the first access network device and the second access network device are access network devices of the 3GPP access type. Furthermore, the RAT types of the first access network device and the second access network device are different, but both belong to the RAT types supported by the first network element #1.

Optionally, the method 400 further includes: S404, where the terminal sends third information to the second access network device, where the third information indicates that the second access network device cannot select the first network element #1. Correspondingly, the second access network device receives the third information from the terminal, and based on the third information, sends a registration request message to other first network elements except the first network element #1.

For example, the third information includes an identifier of the first network element #1 and an indication that the first network element #1 is not to be selected. For instance, the third information does not include the identifier of the first network element #1; or the third information does not include the 5G-GUTI; or the third information includes the 5G-GUTI and the 5G-GUTI does not include the identifier of the first network element #1; or the third information includes the 5G-GUTI, and the 5G-GUTI includes the identifiers of other first network elements (first network elements other than the first network element #1).

It is to be understood that the third information in this application may be carried in an AN message, or the third information may be replaced with an AN message. Optionally, the AN message may further include a registration request message. Herein, the AN message may be an RRC message.

For example, when the third information is replaced with an AN message, the AN message may not include an identifier of the first network element #1, in order to prevent the second access network device from selecting the first network element #1 for connection. Specifically, after receiving the third information, the second access network device does not select the first network element #1, but instead sends a registration request message to another first network element (a first network element other than the first network element #1).

For example, when the third information includes the 5G-GUTI, or when the 5G-GUTI includes the identifier of another first network element, the second access network device selects another first network element included in the 5G-GUTI, and sends a registration request message to the another first network element (a first network element other than the first network element #1).

In summary, when the first information indicates that the first network element #1 does not support dual connection, the terminal may connect to the first network element #1 simultaneously through the first access network device and the second access network device. When the first information indicates that the first network element #1 does not support dual connection, the terminal may connect to the first network element #1 through the first access network device and connect to other first network elements (excluding the first network element #1) through the second access network device.

Among them, both the first access network device and the second access network device are access network devices of the 3GPP access type. Furthermore, the RAT types of the first access network device and the second access network device may be the same or different.

In the embodiments of this application, after the terminal is connected to the first network element #1 through the first access network device, the terminal may determine, by receiving first information sent by the first network element #1, whether the first network element #1 supports the terminal to simultaneously connected to the first network element #1 through two access network devices. If the first network element #1 supports the terminal to simultaneously connected to the first network element #1 through two access network devices, the terminal sends second information used to indicate the first network element #1 to the second access network device, to request the second access network device to connect to the first network element #1. Alternatively, if the first network element #1 does not support the terminal to simultaneously connected to the first network element #1 through two access network devices, the terminal sends third information used to indicate that the second access network device cannot select the first network element #1 to the second access network device, to request the second access network device to connect to another first network element (other than the first network element #1). Therefore, the method provided in this application can successfully connect the terminal to the network through two access network devices when the terminal accesses the network through a dual 3GPP mode.

Optionally, before S402, the method 400 further includes: S405, where the terminal sends fifth information to the first network element #1 through the first access network device, where the fifth information indicates that the terminal supports accessing the network through two access network devices. Correspondingly, the first network element #1 receives the fifth information from the terminal.

In other words, the fifth information indicates that the terminal expects to access the network through two access network devices. For example, the fifth information may be dual steer support (dual steer support) information.

It is to be understood that the fifth information may trigger the first network element #1 to send the first information to the terminal (i.e., the first network element #1 sends the first information to the terminal upon receiving the fifth information), and at the same time, when the first network element #1 supports dual connection, the first network element #1 may accept, based on the fifth information, an N2 request sent by the terminal through the second access network device. The N2 request may be understood as a request from an access network device to connect to the first network element.

It may also be understood that the fifth information in this application may be carried in the registration request message.

Optionally, when the first information indicates that the first network element #1 supports the terminal through dual connection of two access network devices, the method 400 further includes: the terminal sends the fifth information to the second access network device.

Correspondingly, the second access network device receives the fifth information and sends the fifth information to the first network element, so that the first network element #1 accepts, based on the fifth information, the N2 request sent by the terminal through the second access network device.

Optionally, before S402, the method 400 further includes: S406, where the PCF or UDM sends fourth information to the first network element #1, where the fourth information indicates whether the terminal is authorized to access the network through two access network devices. Correspondingly, the first network element #1 receives the fourth information.

It is to be understood that "the terminal is authorized to access the network through two access network devices" means that the terminal is allowed to access the network using a dual 3GPP mode; while "the terminal is not authorized to access the network through two access network devices" means that the terminal is not allowed to access the network using a dual 3GPP mode. For example, the fourth information may be dual steer authorized (dual steer authorized) information.

Optionally, the first network element #1 receives the policy information of the terminal from the PCF, where the policy information includes an indication of whether the terminal is authorized to access the network through two access network devices. Alternatively, the first network element #1 receives the subscription information of the terminal from the UDM, where the subscription information includes an indication of whether the terminal is authorized to access the network through two access network devices.

Example 1: When the fourth information indicates that the terminal is not authorized to access the network through two access network devices, the first network element #1 may send the first information to the terminal or may not send the first information based on the fourth information.

In other words, when the fourth information indicates that the terminal is not authorized to access the network through two access network devices, regardless of whether the first network element #1 has the capability to support dual connection or not, the first network element #1 may not need to send the first information (i.e., S402 may not be performed), or the first network element #1 may send the first information to the terminal, where the first information indicates that the first network element #1 does not support dual connection of the terminal through two access network devices.

It is to be understood that when the terminal does not receive the first information, the terminal considers that the first network element #1 does not support dual connection of the terminal through two access network devices, or the network in which the first network element is located does not support dual connection of the terminal through two access network devices.

Example 2: When the fourth information indicates that the terminal is authorized to access the network through two access network devices, the first network element #1 may send the first information to the terminal based on the fourth information and the capability of the first network element (or the capability of the network in which the first network element is located).

For example, when the fourth information indicates that the terminal is authorized to access the network through two access network devices, and the first network element has the capability to support dual connection, the first network element #1 sends the first information to the terminal, where the first information indicates that the first network element #1 supports dual connection of the terminal through two access network devices. Alternatively, when the fourth information indicates that the terminal is authorized to access the network through two access network devices, and the network in which the first network element is located has the capability to support dual connection, the first network element sends the first information to the terminal, where the first information indicates that the network in which the first network element is located supports dual connection of the terminal through two access network devices.

For example, when the fourth information indicates that the terminal is authorized to access the network through two access network devices, and the first network element #1 does not have the capability to support dual connection, the first network element #1 sends the first information to the terminal, where the first information indicates that the first network element does not support dual connection of the terminal through two access network devices. Alternatively, when the fourth information indicates that the terminal is authorized to access the network through two access network devices, and the network where the first network element #1 is located does not have the capability to support dual connection, the first network element #1 sends the first information to the terminal, where the first information indicates that the network where the first network element is located does not support dual connection of the terminal through two access network devices.

It should be noted that when S405 is performed, S406 may not need to be performed; or when S406 is performed, S405 may not need to be performed (in this case, the first information sent by the first network element may be triggered by the fourth information); or both S405 and S406 are performed.

For example, when both S405 and S406 are performed, the first network element #1 may continue to receive the fourth information after receiving the fifth information, and send the first information to the terminal or not send the first information based on the fourth information and the capability of the first network element #1. For descriptions of sending the first information and whether the first information is sent, refer to the descriptions in S406, which will not be repeated herein.

Optionally, after S406, the method 400 further includes: the first network element #1 sends fourth information to the terminal through the first access network device. Correspondingly, the terminal receives the fourth information from the first network element #1, and determines, based on the fourth information, whether the terminal can access the network through the second access network device.

For example, when the fourth information indicates that the terminal is authorized to access the network through two access network devices, the terminal determines that it can access the network through the second access network device. That is, the terminal may continue to perform S403 or S404.

Furthermore, when the first information indicates that the first network element #1 supports dual connection of the terminal through two access network devices, and the fourth information indicates that the terminal is authorized to access the network through the two access network devices, the terminal may proceed to perform S403; or when the first information indicates that the first network element #1 does not support dual connection of the terminal through two access network devices, but the fourth information indicates that the terminal is authorized to access the network through the two access network devices, the terminal may proceed to perform S404.

For example, when the fourth information indicates that the terminal is not authorized to access the network through two access network devices, the terminal determines that it cannot access the network through the second access network device. That is, the terminal cannot continue to perform S403 and S404.

Optionally, before S403, the method 400 further includes: the first network element #1 sends sixth information to the terminal, where the sixth information indicates the RAT types of the two access network devices. Correspondingly, the terminal receives the sixth information from the first network element #1 and selects the second access network device based on the sixth information.

Based on this method, after the terminal is connected to the first network element #1 through the first access network device, the terminal can select, based on the sixth information, a second access network device that belongs to the RAT type indicated by the sixth information, thereby improving the success rate of the terminal accessing the same first network element through two access network devices.

For example, the RAT types of the two access network devices indicated by the sixth information are 5G NR and 6G RAT. If the terminal is connected to the first network element through the first access network device of the 5G NR type, the RAT type of the second access network device selected by the terminal based on the sixth information should be 6G RAT. In this way, the terminal can then continue to connect to the first network element through the second access network device.

It is to be understood that, since in S401, the terminal is connected to the first network element #1 through the first access network device, the RAT type of the first access network device belongs to the RAT types supported by the first network element. The RAT type of the first access network device may be the same as or different from the RAT type of the second access network device.

It should be noted that the access types of both the first access network device and the second access network device are 3GPP access types. That is, the first network element supports a terminal to simultaneously connect to the first network element through two access network devices whose access types are both 3GPP access types.

FIG. 5 is another schematic flowchart of a communication method 500 according to an embodiment of this application. The method 500 may include S501 to S506. The following provides a detailed description of the steps shown in the method 500.

S501: The terminal sends fifth information to the first access network device, where the fifth information indicates that the terminal supports accessing a network through two access network devices, in order to request the first access network device to select a first network element that supports dual connection for a connection. Correspondingly, the first access network device receives the fifth information from the terminal.

In other words, the fifth information indicates that the terminal expects to access the network through two access network devices. For example, the fifth information may be dual steer support (dual steer support) information.

The fifth information may be carried in the registration request message; or the fifth information is carried in an AN message, and optionally, the AN message may further include the registration request message. That is, the AN message includes the registration request message and an indication that the terminal supports accessing the network through two access network devices.

The access type of the first access network device mentioned above is a 3GPP access type.

S502: The terminal is connected to the first network element #1 via the first access network device. In other words, the terminal registers with the first network element #1 through the first access network device. Alternatively, the terminal is connected with the first network element #1 via the first access network device.

The terminal being connected to the first network element #1 through the first access network device may include: the first access network device establishing a connection with the first network element based on the fifth information. Herein, the first access network device may be connected to the first network element through an N2 interface, where the first network element is the first network element to which the terminal is registered through the first access network device.

Example 1: The first access network device may select the first network element #1 based on the fifth information and establish a connection with the first network element #1.

Optionally, the first access network device is configured with information indicating whether multiple first network elements support dual connection on the first access network device side. Therefore, the first access network device may select, based on the fifth information, a first network element that supports dual connection as much as possible. If the first access network device is configured with information indicating that the first network element supports dual connection, the first access network device may select, based on the fifth information, the first network element that supports dual connection, meaning that the first network element supports dual connection. If the first access network device is not configured with information indicating that the first network element supports dual connection, the first access network device may not select a first network element that supports dual connection based on the fifth information, meaning that the first network element does not support dual connection.

Example 2: The first access network device may connect to the first network element #1 based on the fifth information, which may include the following steps 1 to 3:
Step 1: After receiving the fifth information, the first access network device sends seventh information to the NRF, where the seventh information is used to request the NRF to select a first network element indicating an instruction for dual connection of the terminal through two access network devices.

For example, the seventh information may be a network element discovery request message, or the seventh information may be carried in the network element discovery request message, where the message includes a network function network element type as the first network element, and the requirement is "supporting dual connection of the terminal through two access network devices." In this way, the NRF selects the first network element that supports dual connection and returns the identifier of the selected first network element to the access network device. If the NRF cannot select a first network element that supports dual connection, it also indicates to the access network device that the selected first network element does not support dual connection.

When each first network element registers with the NRF, the first network element sends information indicating "supporting dual connection of the terminal through two access network devices" to the NRF, so that the NRF stores the fact that the first network element supports dual connection of the terminal through two access network devices. This information indicating "supporting dual connection of the terminal through two access network devices" may be dual steer support (dual steer support) information.

For the first access network device, if the first access network device does not receive information indicating that the selected first network element does not support dual connection, the first access network device may connect to the first network element identified by the first network element identifier, and may determine that the connected first network element identified by the first network element identifier supports dual connection; if the first access network device receives information indicating that the selected first network element does not support dual connection, the first access network device may connect to the first network element identified by the first network element identifier, and may determine that the connected first network element identified by the first network element identifier does not support dual connection.

Step 2: The NRF sends an identifier of the first network element #1 to the first access network device. Correspondingly, the first access network device receives the identifier of the first network element #1 from the NRF.

Step 3: The first access network device establishes a connection with the first network element #1 based on the identifier of the first network element #1.

In the foregoing Example 1 and Example 2, the connection between the first access network device and the first network element #1 may be established by sending an N2 request to the first network element #1. For example, the first access network device sends an N2 request to the first network element #1, where the N2 request includes a registration request message. The first network element #1 receives the N2 request and sends an N2 request acceptance message to the first access network device, thereby establishing a connection between the first access network device and the first network element #1.

If the fifth information is carried in an N2 request or a registration request message, then during the process of connecting the first access network device to the first network element #1, the fifth information can be sent to the first network element #1.

Optionally, if the fifth information is not carried in the N2 request or the registration request message, after S502, the method 500 further includes: the first access network device sends the fifth information to the first network element #1. This is done so that when the first network element supports dual connection, the first network element accepts, based on the fifth information, the N2 request sent by the terminal through the second access network device.

S503: The first access network device sends first information to the terminal, where the first information indicates whether the first network element #1 supports dual connection of the terminal through two access network devices. Correspondingly, the terminal receives the first information from the first access network device.

Among them, the first information is generated by the first access network device and sent to the terminal. Alternatively, the first information is generated by the NRF, and the NRF sends the generated first information to the terminal through the first access network device.

Alternatively, the first information indicates whether the network in which the first network element #1 is located supports dual connection of the terminal through two access network devices. For example, the first information may be dual connection support (dual steer support) information.

Optionally, when the first information indicates that the first network element #1 supports dual connection of the terminal through two access network devices, the method 500 further includes: S504, where the terminal sends second information to the second access network device, where the second information indicates the first network element #1. Correspondingly, the second access network device receives the second information from the terminal.

For the description of S504, reference may be made to the related description in S403 above, and details will not be repeated here.

Optionally, when the first information indicates that the first network element #1 does not support dual connection of the terminal through two access network devices, the method 500 further includes: S505, where the terminal sends third information to the second access network device, where the third information indicates that the second access network device cannot select the first network element #1. Correspondingly, the second access network device receives the third information.

For the description of S505, reference may be made to the relevant description in S404 above, and no further elaboration will be provided here.

In the embodiments of this application, the terminal sends information indicating that the terminal supports access to the network through two access network devices to the first access network device, so as to request the first access network device to select a first network element that supports simultaneous connections to the two access network devices from the same first network element. After the first access network device establishes a connection with the first network element #1, the first access network device indicates, through the first information, whether the selected first network element #1 supports simultaneous connections to the two access network devices, so that the terminal receiving the first information can determine, based on the first information, whether it can connect to the first network element #1 or connect to another first network element through the second access network device. Therefore, the method provided in this application can successfully connect to the network through two access network devices when the terminal accesses the network through a dual 3GPP mode.

Optionally, the method 500 further includes: S506, where the PCF or UDM sends fourth information to the first network element #1, where the fourth information indicates whether the terminal is authorized to access the network through two access network devices. Correspondingly, the first network element receives the fourth information.

It is also to be understood that when the terminal is authorized to access the network through two access network devices, the terminal may use a dual 3GPP mode to access the network; when the terminal is not authorized to access the network through two access network devices, the terminal cannot use the dual 3GPP mode to access the network.

Optionally, the first network element #1 receives the policy information of the terminal from the PCF, where the policy information includes an indication of whether the terminal is authorized to access the network through two access network devices. Alternatively, the first network element #1 receives the subscription information of the terminal from the UDM, where the subscription information includes an indication of whether the terminal is authorized to access the network through two access network devices.

It should be noted that S506 may be performed before S503, or may be performed after S503.

**In a first possible implementation,** S506 is performed before S503. In this case, after receiving the fourth information, the first network element #1 may send the fourth information to the first access network device. Correspondingly, the first access network device receives the fourth information, and sends the first information based on the fourth information.

Example 1: When the fourth information indicates that the terminal is not authorized to access the network through two access network devices, the first access network device may send the first information to the terminal or may not send the first information based on the fourth information.

In other words, when the fourth information indicates that the terminal is not authorized to access the network through two access network devices, regardless of whether the first access network device connected to the first network element has the capability to support dual connection or not, the first access network device may not need to send the first information (i.e., S503 may not be performed), or the first access network device may send the first information to the terminal, where the first information indicates that the first network element #1 does not support dual connection of the terminal through two access network devices.

It is to be understood that when the terminal does not receive the first information, the terminal understands that the first network element does not support dual connection of the terminal through two access network devices, or the network in which the first network element is located does not support dual connection of the terminal through two access network devices.

Example 2: When the fourth information indicates that the terminal is authorized to access the network through two access network devices, the first access network device may send the first information to the terminal based on the fourth information and the capability of the first network element itself.

For example, when the fourth information indicates that the terminal is authorized to access the network through two access network devices, and the first network element #1 has the capability to support dual connection, the first access network device sends the first information to the terminal, where the first information indicates that the first network element does not support dual connection of the terminal through two access network devices.

For another example, when the fourth information indicates that the terminal is authorized to access the network through two access network devices, and the first network element #1 does not have the capability to support dual connection, the first access network device sends first information to the terminal, where the first information indicates that the first network element does not support dual connection of the terminal through two access network devices.

**In a second possible implementation**, S506 is performed after S503. Then, after receiving the fourth information, the first network element #1 sends the fourth information to the terminal through the first access network device. Correspondingly, the terminal receives the fourth information from the first network element #1, and determines, based on the fourth information, whether the terminal can access the network through the second access network device.

Example 1: When the fourth information indicates that the terminal is authorized to access the network through two access network devices, the terminal determines that it can access the network through the second access network device. That is, the terminal may continue to perform S504 or S505.

Furthermore, when the first information indicates that the first network element #1 supports dual connection of the terminal through two access network devices, and the fourth information indicates that the terminal is authorized to access the network through two access network devices, the terminal may continue to perform S504; or when the first information indicates that the first network element #1 does not support dual connection of the terminal through two access network devices, but the fourth information indicates that the terminal is authorized to access the network through two access network devices, the terminal may continue to perform S505.

In Example 2, when the fourth information indicates that the terminal is not authorized to access the network through two access network devices, the terminal determines that it cannot access the network through the second access network device. That is, the terminal cannot continue to perform S504 and S505.

Optionally, when the first access network device selects the first network element #1 through the NRF, after S506, the method 500 further includes: the first network element #1 sending fourth information to the NRF. Correspondingly, the NRF receives the fourth information from the first network element #1, and sends the first information to the terminal through the first access network device based on the fourth information.

Optionally, before S504, the method 500 further includes: the first network element #1 sends sixth information to the terminal, where the sixth information indicates the RAT types of the two access network devices. Correspondingly, the terminal receives the sixth information from the first network element #1 and selects the second access network device based on the sixth information.

For the description of the sixth information, refer to the description in the method 400 mentioned above, and no further details will be provided here.

Like the previous text, the access types of both the first access network device and the second access network device are 3GPP access types. When both the first access network device and the second access network device are connected to the first network element, the RAT type of the first access network device and the RAT type of the second access network device both belong to the RAT types supported by the first network element.

The method 400 and the method 500 are implemented independently. That is, for a terminal that supports dual 3GPP access, whether the terminal is connected to the same first network element or to different first network elements through two access network devices may be determined based on method 400 or method 500.

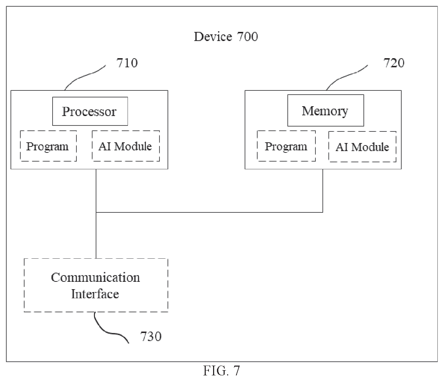

The foregoing has described in detail the method provided in the embodiments of this application, and the following will describe in detail the apparatus provided in the embodiments of this application with reference to FIG. 6 and FIG. 7.

FIG. 6 and FIG. 7 are schematic diagrams of possible apparatuses according to an embodiment of this application. These apparatuses may be configured to implement functions of the terminal, the first network element, the first access network device, or the second access network device in the foregoing method embodiments, and therefore can also achieve the beneficial effects of the foregoing method embodiments.

FIG. 6 is a schematic block diagram of an apparatus according to an embodiment of this application. As shown in FIG. 6, the apparatus 600 includes a transceiver module 610 and a processing module 620.

A possible design is that the apparatus 600 is configured to implement the functions of the terminal in the method embodiment shown in FIG. 4 or FIG. 5.

For example, the processing module 620 is configured to: connect to a first network element through the first access network device, where the first network element is responsible for access management of the terminal; the transceiver module 610 is configured to: receive first information from the first access network device or the first network element, where the first information is used to indicate whether the first network element supports dual connection of the terminal through two access network devices; and, when the first information indicates that the first network element supports dual connection of the terminal through two access network devices, send second information to a second access network device, where the second information is used to indicate the first network element, so as to request the second access network device to connect to the first network element.

Optionally, the transceiver module 610 is further configured to: when the first information indicates that the first network element does not support dual connection of the terminal through two access network devices, send third information to the second access network device, wherein the third information indicates that the second access network device cannot select the first network element.

Optionally, the transceiver module 610 is further configured to: receive fourth information from the first network element, wherein the fourth information indicates that the terminal is authorized to access the network through two access network devices; and the processing module 620 is further configured to: send second information to the second access network device based on the fourth information.

Optionally, the transceiver module 610 is further configured to: send fifth information to the first access network device, wherein the fifth information indicates that the terminal supports accessing the network through two access network devices.

Optionally, the transceiver module 610 is further configured to: receive sixth information from the first network element, wherein the sixth information indicates a radio access technology RAT type of the two access network devices; and the processing module 620 is further configured to: select the second access network device based on the sixth information.

For more detailed descriptions of the transceiver module 610 and the processing module 620 mentioned above, one may directly refer to the relevant descriptions in the embodiments illustrated in Figure 4 or Figure 5, and no further elaboration will be provided here.

Another possible design is that the apparatus 600 is configured to implement the functions of the first network element in the method embodiment shown in Figure 4 or Figure 5.

For example, the transceiver module 610 is configured to: send first information to the terminal, where the first information is used to indicate whether the first network element supports dual connection of the terminal through two access network devices; and receive a registration request message from a second access network device, where the registration request message is sent by the terminal when the first network element supports dual connection of the terminal through two access network devices.

Optionally, the transceiver module 610 is further configured to: receive fifth information from a terminal through a first access network device, where the fifth information indicates that the terminal supports accessing a network through two access network devices.

Optionally, the transceiver module 610 is further configured to receive fourth information from a policy control function (PCF), wherein the fourth information indicates that the terminal is authorized to access the network through two access network devices.

Optionally, the transceiver module 610 is further configured to send the fourth information to the terminal.

For more detailed descriptions of the transceiver module 610 and the processing module 620 mentioned above, one may directly refer to the relevant descriptions in the embodiments illustrated in Figure 4 or Figure 5, and no further elaboration will be provided here.

Another possible design is that the apparatus 600 is configured to implement the functions of the first access network device in the method embodiment shown in FIG. 4 or FIG. 5.

For example, the transceiver module 610 is configured to: receive fifth information from a terminal, wherein the fifth information indicates that the terminal supports accessing a network through two access network devices; the processing module 620 is configured to: connect to a first network element based on the fifth information; the transceiver module 610 is further configured to: send first information to the terminal, wherein the first information indicates whether the first network element supports dual connection of the terminal through two access network devices.

Optionally, the processing module 620 is further configured to: send seventh information to a network repository function (NRF) network element based on the fifth information, wherein the seventh information is used to request the NRF to select a first network element that supports dual connection of the terminal through two access network devices; and the transceiver module 610 is further configured to: receive an identifier of the first network element from the NRF; and the processing module 620 is further configured to: establish a connection with the first network element based on the identifier of the first network element.

Optionally, the transceiver module 610 is further configured to receive the first information from the NRF.

Optionally, the transceiver module 610 is further configured to receive fourth information sent by the first network element, wherein the fourth information indicates that the terminal is authorized to access the network through two access network devices; and the processing module 620 is further configured to send first information to the terminal based on the fourth information.

Optionally, the transceiver module 610 is further configured to send the fifth information to the first network element.

For more detailed descriptions of the transceiver module 610 and the processing module 620 mentioned above, one may directly refer to the relevant descriptions in the embodiments illustrated in Figure 4 or Figure 5, and no further elaboration will be provided here.

Another possible design is that the apparatus 600 is configured to implement the functions of the second access network device in the method embodiment shown in Figure 4 or Figure 5.

For example, the transceiver module 610 is configured to: receive second information or third information from a terminal, where the second information indicates a first network element, and the third information indicates that the second access network device cannot select the first network element; the processing module 620 is configured to: connect the terminal to the first network element through the first access network device, where the first network element is responsible for access management of the terminal; determine a target network element based on the second information or the third information; and the transceiver module 610 is further configured to: send a registration request message to the target network element.

Optionally, the target network element is the first network element; the processing module 620 is further configured to: determine, based on the second information, that the target network element is the first network element.

Optionally, the target AMF is another network element responsible for access management of a terminal, other than the first network element; the processing module 620 is further configured to: determine, based on the third information, another network element responsible for access management of a terminal, other than the first network element, as the target network element.

It should be noted that the apparatus 600 may include a sending module but not a receiving module. Alternatively, the apparatus 600 may include a receiving module but not a sending module. This can be specifically determined based on whether the solution executed by the apparatus 600 includes a sending action and a receiving action. It is to be understood that, since the apparatus 600 has a communication function, it may also be referred to as a communication apparatus.

FIG. 7 is another schematic block diagram of an apparatus according to an embodiment of this application. As shown in FIG. 7, the apparatus 700 includes one or more processors 710. The processor 710 may be a general-purpose processor, a dedicated processor, or the like. For example, the processor 710 may be a baseband processor or a central processing unit. The baseband processor may be configured to process communication protocols and communication data, and the central processing unit may be configured to control an apparatus (such as a terminal, a first network element, a first access network device, a second access network device, a chip, or the like), execute a software program, and process data of the software program.

Optionally, in one design, the processor 710 may include a program (which may also be referred to as code or instructions), which may be executed on the processor 710, so that the apparatus 700 performs the methods performed by the terminal, the first network element, the first access network device, or the second access network device in the method embodiments described above. In another possible design, the apparatus 700 includes a circuit (not shown in FIG. 7), which is configured to implement the functions of the terminal, the first network element, the first access network device, or the second access network device in the method embodiments described above.

For example, the processor 710 may be configured to execute the computer program or instructions in the memory, to implement the steps performed by the terminal, the first network element, the first access network device, or the second access network device in the method embodiment illustrated in any one of the embodiments shown in FIG. 3 or FIG. 4.

Optionally, the apparatus 700 may include one or more memories 720, which store a program (which may also be referred to as code or instructions), where the program may be executed on the processor 710, so that the apparatus 700 performs the methods performed by the terminal, the first network element, the first access network device, or the second access network device in the foregoing embodiments.

Optionally, the processor 710 and/or the memory 720 may include an artificial intelligence (AI) module, which is configured to implement AI-related functions. The AI module may be implemented through software, hardware, or a combination of both. For example, the AI module may include a radio intelligent controller (RIC) module. For instance, the AI module may be a near real-time RIC or a non-real-time RIC.

Optionally, the processor 710 and/or the memory 720 may further store data. The processor and the memory may be provided separately or integrated together.

Optionally, the apparatus 700 may further include a communication interface 730. The processor 710 may sometimes also be referred to as a processing unit, which controls an apparatus (such as a terminal, a first network element, a first access network device, or a second access network device). The communication interface 730 may sometimes also be referred to as a transceiver unit, transceiver, transceiver circuit, or transceiver, and is configured to implement a transceiver function of the apparatus.

Optionally, the apparatus 700 further includes a communication interface 730. The processor 710 and the communication interface 730 are coupled to each other. It is to be understood that the communication interface 730 may be a transceiver or an input/output interface.

It is to be understood that since the apparatus 700 has a communication function, it may also be referred to as a communication apparatus.

When the apparatus 700 is configured to implement the method in FIG. 4 or FIG. 5, the processor 710 is configured to perform the functions of the processing unit, and the communication interface 730 is configured to perform the functions of the transceiver module. Whether the communication interface 730 is used for sending or receiving may specifically depend on whether the apparatus 700 performs a sending action or a receiving action in the solution executed by the apparatus 700.

It is to be understood that when the apparatus 700 is a terminal, a first network element, a first access network device, or a second access network device, the communication interface 730 may be a transceiver, which may specifically include a transmitter and a receiver, where the transmitter is configured to send a signal, and the receiver is configured to receive a signal. When the apparatus 700 is a chip applied to a terminal, a first network element, a first access network device, or a second access network device, the communication interface 730 may be an input/output circuit, where the input circuit may be configured to receive, and the output interface may be configured to send.

It should be noted that the foregoing method embodiments may be applied to a processor or implemented by a processor. The processor may be an integrated circuit chip that has a signal processing capability. In an implementation process, the steps of the foregoing method embodiments may be implemented by an integrated logic circuit of hardware in the processor or by instructions in a form of software.

The processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps of the method disclosed in the embodiments of this application may be directly implemented by a hardware decoding processor or by a combination of hardware and software modules in the decoding processor. The software module may be located in a mature storage medium in this field, such as a random access memory, flash memory, read-only memory, electrically erasable programmable read-only memory, register, or the like. The storage medium is located in a memory, and the processor reads information in the memory and completes the steps of the foregoing method in combination with its hardware.

The memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example and not limitation, many forms of RAM are available, for example, static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the systems and methods described here is intended to include, but not limited to, these and any other suitable types of memories.

This application also provides a computer-readable medium, which stores a computer program. When the computer program is executed by a computer, the functions of the foregoing method embodiments are implemented.

This application also provides a computer program product comprising instructions. When the computer program product is executed by a computer, the functions of the foregoing method embodiments are implemented.

The methods provided in the foregoing embodiments may be implemented entirely or partially by software, hardware, firmware, or any combination thereof. When implemented using software, the methods may be implemented entirely or partially in the form of a computer program product. The computer program product may include one or more computer instructions. When the computer program instructions are loaded and executed on a computer, the processes or functions according to the embodiments of this application are entirely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, such as a server or a data center, that integrates one or more usable media. The usable medium may be a magnetic medium (for example, a floppy disk, a hard disk drive, or a magnetic disk), an optical medium (for example, a DVD), a semiconductor medium (for example, a solid-state drive (SSD)), or the like.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments, and details are not described herein again.

In the embodiments provided in this application, It is to be understood that the disclosed systems, apparatuses, and methods may be implemented in other ways. For example, the foregoing apparatus embodiments are merely examples. For example, the division of the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected according to an actual need to achieve the objectives of the solutions in embodiments of this application.

In addition, functional units in embodiments of this application may be integrated into one processing unit, each of the units may exist physically, or two or more units may be integrated into one unit.

The foregoing functions may be implemented by software function units and sold or used as an independent product, and may be stored in a computer-readable storage medium in this case. Based on such an understanding, the technical solutions of this application essentially, or the part contributing to the conventional technology, or some of the technical solutions may be implemented in a form of a software product. The software product is stored in a storage medium and includes several instructions for instructing a computer device (which may be a personal computer, a server, or a network device) to perform all or a part of the steps of the methods described in embodiments of this application. The storage medium mentioned above includes any medium that can store program code, such as a USB flash drive, a removable hard disk, a read-only memory, a random access memory, a magnetic disk, or an optical disc.

The foregoing descriptions are merely specific implementations of this application, but the protection scope of this application is not limited thereto. Any variation or substitution readily figured out by a person skilled in the art within the technical scope disclosed in this application should also fall within the protection scope of this application. Therefore, the protection scope of this application should be determined by the protection scope defined in the claims.

## Claims

1. A communication method, applied to a terminal, wherein the method comprises:
connecting to a first network element via a first access network device, wherein the first network element is responsible for access management of the terminal; and
receiving first information from the first access network device or the first network element, wherein the first information is used to indicate whether the first network element supports dual connection of the terminal through two access network devices; and
when the first information indicates that the first network element supports dual connection of the terminal through two access network devices, sending second information to a second access network device, wherein the second information is used to indicate the first network element, to request the second access network device to connect to the first network element.

2. The method according to claim 1, wherein the method further comprises:
when the first information indicates that the first network element does not support dual connection of the terminal through two access network devices, sending third information to the second access network device, wherein the third information indicates that the second access network device cannot select the first network element.

3. The method according to claim 2, wherein
the third information does not include an identifier of the first network element; or
the third information includes an identifier of the first network element and an indication not to select the first network element.

4. The method according to any one of claims 1 to 3, wherein the method further comprises:
receiving fourth information from the first network element, wherein the fourth information indicates that the terminal is authorized to access the network through two access network devices; and
sending second information to the second access network device comprises:
sending the second information to the second access network device based on the fourth information.

5. The method according to any one of claims 1 to 4, wherein before receiving the first information from the first access network device or the first network element, the method further comprises:
sending fifth information to the first access network device, wherein the fifth information indicates that the terminal supports accessing the network through two access network devices.

6. The method according to any one of claims 1 to 5, wherein the access types of the two access network devices are both 3rd generation partnership project access types.

7. The method according to any one of claims 1 to 6, wherein the method further comprises:
receiving sixth information from the first network element, wherein the sixth information indicates the radio access technology types of the two access network devices; and
selecting the second access network device based on the sixth information.

8. A communication method, applied to a first network element, wherein the first network element is responsible for access management of a terminal, and the method comprises:
sending first information to the terminal, wherein the first information is used to indicate whether the first network element supports dual connection of the terminal through two access network devices; and
receiving a registration request message from a second access network device, wherein the registration request message is sent by the terminal when the first network element supports dual connection of the terminal through two access network devices.

9. The method according to claim 8, wherein the method further comprises:
receiving fifth information from the terminal through the first access network device, wherein the fifth information indicates that the terminal supports accessing the network through two access network devices.

10. The method according to claim 8, wherein the method further comprises:
receiving fourth information from a policy control function network element, wherein the fourth information indicates that the terminal is authorized to access the network through two access network devices.

11. The method according to claim 10, wherein the method further comprises:
sending the fourth information to the terminal.

12. The method according to any one of claims 8 to 11, wherein the access types of the two access network devices are both third generation partnership project access types.

13. A communication method, applied to a first access network device, wherein the method comprises:
receiving fifth information from a terminal, wherein the fifth information indicates that the terminal supports accessing a network through two access network devices; and
connecting to the first network element based on the fifth information; and
sending first information to the terminal, wherein the first information indicates whether the first network element supports dual connection of the terminal through two access network devices.

14. The method according to claim 13, wherein connecting to the first network element based on the fifth information comprises:
sending seventh information to a network repository function network element based on the fifth information, wherein the seventh information is used to request the network repository function network element to select a first network element that supports dual connection of the terminal through two access network devices; and
receiving an identifier of the first network element from the network repository function network element; and
connecting to the first network element based on the identifier of the first network element.

15. The method according to claim 14, wherein the method further comprises:
receiving the first information from the network repository function network element.

16. The method according to any one of claims 13 to 15, wherein the method further comprises:
receiving fourth information from the first network element, wherein the fourth information indicates that the terminal is authorized to access the network through two access network devices; and
sending the first information to the terminal comprises:
sending the first information to the terminal based on the fourth information.

17. The method according to any one of claims 13 to 16, wherein the method further comprises:
sending the fifth information to the first network element.

18. The method according to any one of claims 13 to 17, wherein the access types of the two access network devices are both 3rd generation partnership project access types.

19. A communication apparatus, comprising a module configured to implement the method according to any one of claims 1 to 18.

20. A communication apparatus, comprising a processor configured to implement the method according to any one of claims 1 to 18 by executing a computer program, and/or by a logic circuit.

21. The apparatus according to claim 20, further comprising a memory configured to store a computer program, and/or a configuration file of the logic circuit.

22. The apparatus according to claim 20 or 21, further comprising a communication interface configured to input and/or output signals.

23. A computer-readable storage medium storing a computer program, wherein when the computer program is executed by a processor, the method according to any one of claims 1 to 18 is performed.

24. A computer program product, comprising a computer program, wherein when the computer program is executed, the method according to any one of claims 1 to 18 is performed.

25. A communication system, comprising a terminal, a first network element, and a second access network device, wherein the terminal is configured to implement the method according to any one of claims 1 to 7, the first network element is configured to implement the method according to any one of claims 8 to 12, and the first access network device is configured to implement the method according to any one of claims 13 to 18.
